# EUROPÄISCHE PATENTSCHRIFT

(11) **EP 2 221 141 B1**
(45) Veröffentlichungstag und Bekanntmachung des Hinweises auf die Patenterteilung: **25.07.2012**
(21) Anmeldenummer: 10000537.0
(22) Anmeldetag: 20.01.2010
(51) Int. Cl.: B23Q 1/54, B23Q 3/06

(54) **Fräsverfahren zur automatischen Bearbeitung eines quaderförmigen Werkstücks und Werkzeugmaschine**
Milling method for automatic processing of a cuboid workpiece and machine tool
Procédé de fraisage destiné au traitement automatique d'une pièce à usiner rectangulaire et machine-outil

(30) Priorität: 18.02.2009 DE 102009009494
(43) Veröffentlichungstag der Anmeldung: 25.08.2010
(73) Patentinhaber: P & L GmbH & Co. KG, 20148 Hamburg (DE)
(72) Erfinder: Röders, Jürgen, 29614 Soltau (DE)
(74) Vertreter: Weber, Joachim

(56) Entgegenhaltungen:
- EP-A1- 1 593 455
- WO-A1-03/064088
- WO-A2-2004/054757
- US-A- 4 868 969

## Beschreibung

Die Erfindung bezieht sich auf ein Verfahren zur automatischen Bearbeitung eines quaderförmigen Werkstücks, insbesondere auf ein Fräsverfahren.

Die Erfindung bezieht sich dabei insbesondere auf ein Verfahren zur automatischen Herstellung von quaderförmigen Formhälften und/oder Werkzeughälften für Spritzgussmaschinen oder Ähnliches.

Zur Anwendung der Erfindung wird eine Werkzeugmaschine beschrieben, insbesondere eine Fräsmaschine, welche über unterschiedliche Antriebseinheiten verfügt und eine mehrachsige Relativbewegung zwischen einem Werkstück und einem Werkzeug ermöglicht.

Formen und Werkzeuge bestehen in den meisten Fällen aus zwei quaderförmigen Formhälften. In die Formhälften wird jeweils von einer Seite das herzustellende Werkstück als Negativform eingebracht, von der gegenüberliegenden Seite der Anguss für die Materialzufuhr oder die Schieber, um das herzustellende Werkstück auszustoßen, und von den verbleibenden vier Seiten meist Kühlbohrungen zur Temperierung der Form. Außerdem enthält die Form in der Regel genaue Passflächen oder Außenmaße, um diese in einen Formträger einzupassen. Oder es sind direkt in der Form Elemente zur Zentrierung der beiden Formhälften zueinander vorgesehen. Außerdem können Elemente oder Hilfsmittel zur Befestigung der Form im Formträger oder der Maschine, z.B. Durchgangslöcher, an der Form vorgesehen sein.

Aus diesen Anforderungen ergibt sich in den meisten Fällen, dass für die Herstellung der quaderförmigen Formhälften eine aufwändige Bearbeitung dieser von allen sechs Seiten erforderlich ist, dabei häufig mit sehr hohen Genauigkeiten bezüglich Oberflächenqualität und Toleranzen, um in der Produktion die geforderte Qualität der herzustellenden Werkstücke zu gewährleisten. Dabei sind viele einzelne Arbeitsschritte erforderlich, die eine aufwändige Koordination der Abläufe im Formen- und Werkzeugbau erfordern.

Üblicherweise wird in der Regel zunächst von einem Rohling ausgegangen, der zu allen Seiten hin ein Übermaß aufweist. In einem ersten Arbeitsschritt werden die genauen Außenmaße des Rohlings hergestellt, z.B. durch Fräsen und nachfolgende Schleifbearbeitung. In einem nächsten Arbeitsschritt werden Elemente zur Befestigung auf einer Palette eingebracht, z.B. Gewindelöcher für Schrauben. Dann wird der so vorbearbeitete Rohling auf eine Palette gespannt und kann von den 5 zugänglichen Seiten durch die Fertigungsverfahren Fräsen und Erodieren bearbeitet werden. Dabei wird die Kavität für das herzustellende Werkstück und die Kühlbohrungen eingebracht. Bei 5Achsmaschinen ist das in einer Aufspannung möglich. Anschießend wird die Formhälfte von einer anderen Seite auf die oder eine andere Palette manuell umgespannt, so dass die zuvor von der Palette abgedeckte sechste Seite der quaderförmigen Formhälfte zugänglich für die Bearbeitung wird. Mit den verfügbaren Fertigungsverfahren, z.B. Fräsen, Bohren und Erodieren, werden dann auf der sechsten Seite der Anguss, die Löcher für die Schieber und was sonst noch gefordert ist, eingebracht. Natürlich kann der beschriebene Ablauf etwas variieren, aber es ist stets eine Vielzahl erforderlicher Arbeitsschritte erforderlich, die nicht oder nur begrenzt automatisiert werden können.

Aus dem Stand der Technik sind unterschiedliche Konstruktionen vorbekannt, welche Bewegungen in mehreren Achsen ermöglichen und bei denen eine mehrseitige Bearbeitung eines Werkstücks möglich ist. Dabei ergeben sich konstruktionsbedingt jedoch Grenzen hinsichtlich der Relativbewegbarkeit und Zugänglichkeit des Werkstücks und der möglichen Bearbeitungsparameter.

US 4 868 969 offenbart ein Fräsverfahren, wobei ein quaderförmiger Rohling von zwei gegenüberliegenden Spannbackenfuttern, die in einer Bewegungsachse relativ zueinander bewegbar sind, gespannt wird. Durch die beiden Spannvorrichtungen wird jeweils eine Spannkraft quer zu der Bewegungsachse aufgebracht und das Werkstück wird in Richtung der Bewegungsachse nicht mit einer Spannkraft beaufschlagt.

Der Erfindung liegt die Aufgabe zugrunde, ein Fräsverfahren zur automatischen Bearbeitung eines quaderförmigen Werkstücks zu schaffen, welches automatisierbar mit höchster Präzision eine sechsseitige oder allseitige Bearbeitung des Werkstücks ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß wird das bisherige aufwändige Verfahren mit vielen einzelnen Arbeitsschritten zur Herstellung von quaderförmigen Formen, Werkzeugen oder sonstigen quaderförmigen Werkstücken so automatisiert, dass es vollautomatisch ablaufen kann und dabei die geforderte Qualität sicher erreicht wird. Dazu wird eine spezielle Vorrichtung vorgeschlagen und ein Verfahren zur Nutzung dieser.

Zur Durchführung des erfindungsgemäßen Verfahrens ist eine Werkzeugmaschine vorgesehen, die ein Grundgestell umfasst, an welchem ein Maschinentisch gelagert ist. Dieser kann relativ zu dem Grundgestellt in zumindest einer Bewegungsachse verfahrbar sein.

Erfindungsgemäß wird somit ein quaderförmiger Rohling als Ausgangswerkstück verwendet. Dieser Rohling wird so an zwei einander gegenüberliegenden Seiten gespannt, dass in Längsrichtung des Rohlings keine Kräfte aufgebracht werden, die diesen verformen könnten. Dies unterscheidet das erfindungsgemäße Verfahren von der Spannung eines Rohlings in einer schraubstockartigen Vorrichtung, bei welcher zwei Spannbacken unter Quetschung eines Werkstücks gegeneinander verspannt werden. Erfindungsgemäß erfolgt vielmehr die Spannung des Rohlings quer zur die beiden Spannvorrichtungen verbindenden Achse, so dass lediglich Spannkräfte im Randbereich aufgebracht werden, der Rohling (das Werkstück) jedoch nicht durch Spannkräfte verformt werden kann. Hierdurch ergibt sich ein besonders hohes Maß an Präzision bei der nachfolgenden Bearbeitung. Somit sind die beiden Spannvorrichtungen zur Spannung des Rohlings in dessen Randbereich drehbar um eine gemeinsame Achse gelagert. Eine der Spannvorrichtungen oder auch beide sind mit einem Antrieb zur Drehung des Rohlings versehen. Wenn die Vorrichtung auf den Maschinentisch einer einfachen 3Achsmaschine gesetzt wird, ist durch Drehung des Rohlings bereits eine Mehrseitenbearbeitung möglich. Erfindungsgemäß ist es somit möglich, vier Flächen des Rohlings vollständig zu bearbeiten, abgesehen von dem geringen Randbereich, welcher durch die beiden Spannvorrichtungen benötigt wird. Dieser Bereich ist im Aufmaß enthalten, so dass bei der Bearbeitung dieser beiden Seiten des quaderförmigen Rohlings dieser dann noch unbearbeitete Randbereich abgetrennt werden kann.

Erfindungsgemäß ist es somit möglich, einen mit Aufmaß versehenen Rohling direkt zu spannen und zu bearbeiten. Es ist nicht erforderlich, wie aus dem Stand der Technik bekannt, zumindest eine Seite des Rohlings vorab zu bearbeiten, damit dieser auf eine Palette gespannt werden kann. Bereits hierdurch ergibt sich ein ganz erhebliches Maß an Einsparung des Bearbeitungsaufwandes sowie eine erhebliche Steigerung der Maßhaltigkeit und der Bearbeitungsqualität, da im Wesentlichen auf jegliche Maßnahmen verzichtet werden kann, welche beim Stand der Technik erforderlich sind, um eine exakte Positionierung und Ermittlung der Grunddaten des Werkstücks vorzunehmen.

Es ist vorgesehen, auf dem Maschinentisch einen weiteren Tisch zu lagern, welcher mittels einer ersten Antriebseinheit um eine erste Drehachse zu dem Maschinentisch schwenkbar ist. Somit ist es möglich, den Tisch, an welchem dann eine weitere Antriebseinheit gelagert wird, um die erste Drehachse zu verschwenken. Diese ist bevorzugterweise horizontal angeordnet, kann sich jedoch auch in anderen Orientierungen befinden.

Somit ist auf einer Aufspannfläche eines Basisteils einer um die erste Drehachse schwenkbaren Brücke quer zu der Brücke der vorgesehene Tisch angeordnet. Der Tisch wiederum lagert eine zweite Antriebseinheit sowie ein Gegenlager. Sowohl die zweite Drehachse als auch Schienen zur Verstellung des Gegenlagers verlaufen somit quer zu dem Basisteil der Brücke und damit auch quer zu der ersten Drehachse, um welche die Brücke schwenkbar ist.

Da sowohl die zweite Antriebseinheit als auch das Gegenlager an dem Tisch befestigt sind und somit an dem Basisteil der Brücke gelagert sind, ergibt sich eine Einspannmöglichkeit für ein Werkstück, welches durch die solide Ausgestaltung auch relativ groß sein kann und ein relativ großes Gewicht aufweisen kann. Die bei der Aufspannung und der Bearbeitung auftretenden Kräfte sind somit in optimaler Weise auffangbar, so dass sich eine präzise Bearbeitung eines Werkstücks ergibt.

Die massive und stabile Ausgestaltung der Werkzeugmaschine ergibt sich somit insbesondere auch durch die große Aufspannfläche des Basisteils und die hierdurch ermöglichte optimale Kräfteverteilung. Dabei ist insbesondere wichtig, dass das Basisteil der Brücke im Wesentlichen im Schwerpunkt der Werkzeugmaschine und damit auch des Werkstücks angeordnet ist.

Der Tisch wiederum lagert eine zweite Antriebseinheit sowie ein Gegenlager. Sowohl die zweite Antriebseinheit als auch das Gegenlager sind jeweils mit einer Spannvorrichtung versehen, so dass zwischen der zweiten Antriebseinheit und dem Gegenlager ein Werkstück spannbar ist. Mittels der zweiten Antriebseinheit kann das Werkstück somit relativ zu dem Tisch um die zweiten Drehachse verschwenkt werden. Es sind somit zwei Drehachsen vorgesehen, welche unabhängig voneinander eine Schwenkbewegung ermöglichen, so dass sich insgesamt eine komplexe Relativbewegung zwischen einem Werkstück und einem Werkzeug realisieren lässt.

In einer bevorzugten Weiterbildung ist vorgesehen, dass die erste und die zweite Drehachse senkrecht zueinander angeordnet sind, wobei der Tisch bevorzugterweise zur ersten Drehachse parallel ausgerichtet ist, so dass das Gegenlager, welches quer zum Tisch verfahrbar ist, quer zur Achsrichtung bewegbar ist.

Durch die verfahrbare Ausgestaltung des Gegenlagers, dessen Spannvorrichtung zur Drehung des Werkstücks ebenfalls drehbar gelagert ist, ergibt sich die Möglichkeit, unterschiedlich lange Werkstücke zu spannen und/oder die Werkstücke zum Einlegen oder Entnehmen, beispielsweise mittels eines Roboters, frei zugänglich zu machen.

In einer besonders günstigen Ausgestaltung ist vorgesehen, dass der Tisch in einem Abstand zur ersten Drehachse angeordnet ist. Es ergibt sich somit eine ausgekränkte Konstruktion, welche es ermöglicht, dass das Werkstück selbst im Wesentlichen in der zweiten Drehachse und/oder in einer Ebene, welche durch die beiden Drehachsen aufgespannt wird, angeordnet oder zumindest benachbart ist. Dies führt zu verbesserten Bewegungen der Werkzeugmaschine und zu geringeren Ausgleichsbewegungen bei Schwenkbewegungsvorgängen.

Es kann günstig sein, wenn sich die erste und die zweite Drehachse schneiden, es ist jedoch auch möglich, diese windschief zu einander, jedoch in einem geringen Abstand auszubilden.

Das Gegenlager ist bevorzugterweise mittels einer dritten Antriebseinheit längs des Tisches verfahrbar, beispielsweise pneumatisch, hydraulisch, elektromechanisch oder in anderer Weise.

Es ist möglich, den Maschinentisch relativ zu dem Grundgestell bewegbar auszubilden, beispielsweise in Längsrichtung verfahrbar.

Um eine zeitsparende und präzise Spannung eines Werkstücks zu ermöglichen, kann es günstig sein, wenn die erste und/oder die zweite Spannvorrichtung gestufte Spannbacken umfassen. Diese können eine optimierte Spannung eines Rohlings und eine optimierte Spannung eines bereits teilweise bearbeiteten Werkstücks ermöglichen. In ähnlicher Weise kann es günstig sein, wenn das Spannfutter als geteiltes Spannfutter ausgebildet ist und beispielsweise zumindest eine feste Spannbacke und zumindest eine bewegbare Spannbacke umfasst.

Weiterhin kann es günstig sein, die Spannvorrichtungen (Spannfutter) so auszubilden, dass diese mit zueinander im Winkel geneigten Spannbacken versehen sind. Hierdurch ist es möglich, ein Spiel auszugleichen und/oder Toleranzen eines noch nicht bearbeiteten Werkstücks zu kompensieren.

Im Folgenden wird die Erfindung anhand von Ausführungsbeispielen in Verbindung mit der Zeichnung beschrieben. Dabei zeigt:
- Fig. 1: eine Ansicht zum Stand der Technik mit einem auf einer Palette befestigten Werkstück,
- Fig. 2: eine perspektivische Teilansicht einer Werkzeugmaschine mit quaderförmigem Rohling in erster Aufspannung vor der Bearbeitung,
- Fig. 3: eine Ansicht, analog Fig. 3, mit quaderförmigem Werkstück nach Beendigung der ersten Bearbeitung der vier zugänglichen Seiten in gleicher Aufspannung wie Fig. 2,
- Fig. 4: eine Ansicht, analog Fig. 2 und 3, mit umgespanntem Werkstück (zweite Aufspannung) zur Bearbeitung der bisher noch unbearbeiteten Seiten,
- Fig. 5: eine Ansicht, analog den Fig. 2 bis 4, mit fertigbearbeitetem Werkstück,
- Fig. 6: eine perspektivische Ansicht einer Werkzeugmaschine mit Spannvorrichtung
- Fig. 7: eine perspektivische Darstellung der in den Fig. 2 bis 5 gezeigten Spannvorrichtung auf einer Schwenkbrücke zur simultanen 5-AchsBearbeitung,
- Fig. 8: eine perspektivische Ansicht des wesentlichen Teils einer für das erfindungsgemäße Verfahren verwendbaren Werkzeugmaschine,
- Fig. 9: eine perspektivische Ansicht, analog Fig. 8,
- Fig. 10: eine Seitenansicht der Darstellung der Fig. 8 und 9,
- Fig. 11: eine weitere Seitenansicht,
- Fig. 12, 13: schematische Detailansichten einer Ausführungsvariante der Spannvorrichtung,
- Fig. 14: eine stirnseitige Ansicht eines weiteren Ausführungsbeispiels einer Spannvorrichtung, und
- Fig. 15: eine Ansicht, ähnlich Fig. 14, mit geneigten Spannbacken.

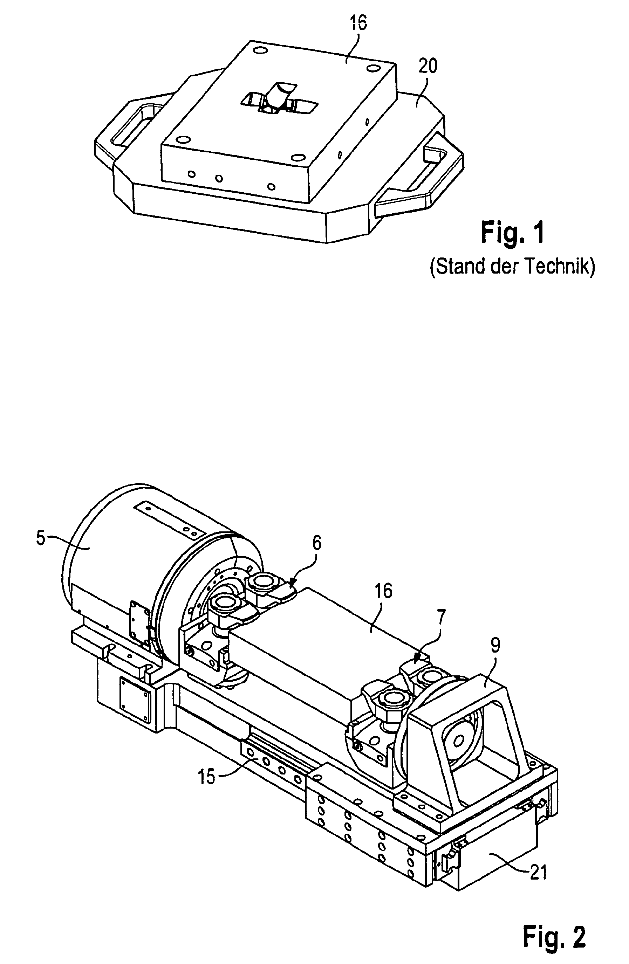

Die Fig. 1 zeigt die Situation im Stand der Technik. Dort wird ein Werkstück 16 auf eine Palette 20 gespannt, nachdem die zur Auflage auf die Palette 20 benötigte Fläche des Werkstücks 16 vorab maßhaltig bearbeitet und mit Positionierungsmitteln versehen wurde. Die Fig. 1 zeigt einen fertigbearbeiteten Zustand.

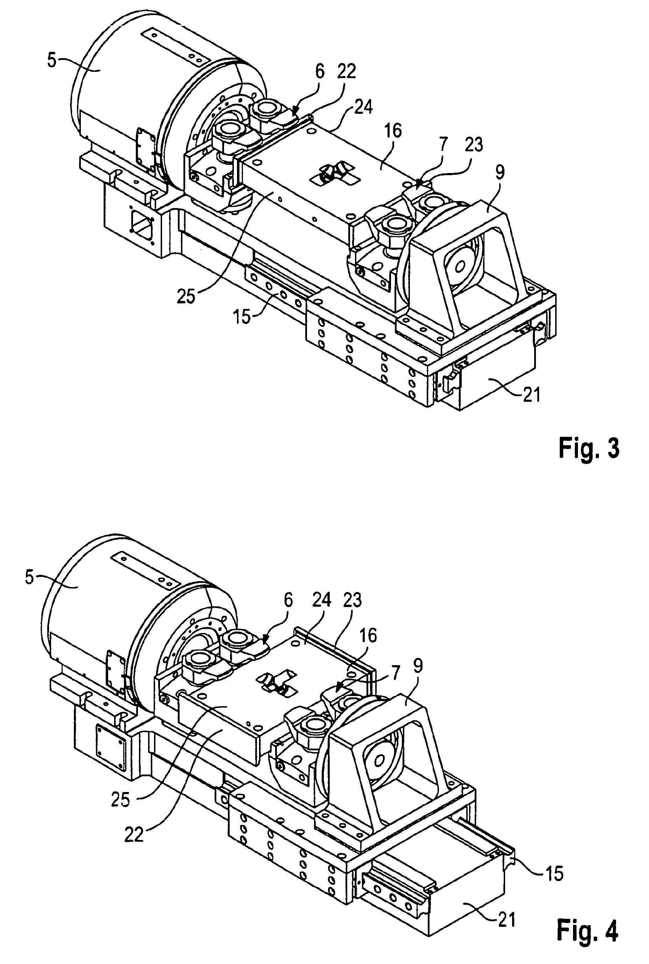

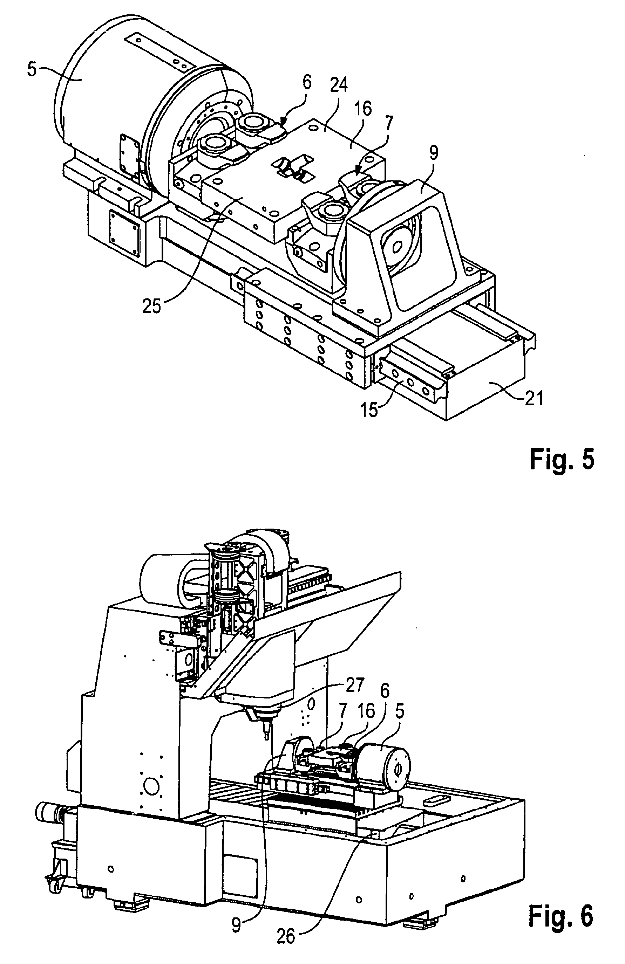

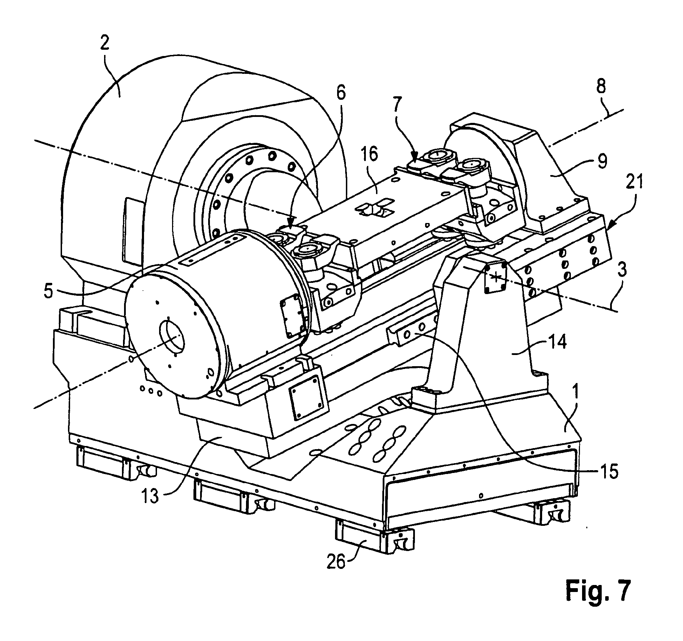

Im Folgenden wird auf die Fig. 2 bis 7 Bezug genommen.

Nachfolgend werden die für das erfindungsgemäße Verfahren verwendbare Werkzeugmaschine und das erfindungsgemäße Herstellungsverfahren beschrieben. Ausgangspunkt ist ein quaderförmiger Rohling, der gegenüber der fertigen Form auf allen Seiten ein Aufmaß aufweist.

Die Vorrichtung umfasst eine stabile Grundplatte 21, auf der lineare Schienen 15 montiert sind, die eine Verfahrbewegung eines Gegenhalters (Gegenlager 9) entlang der linearen Schienen 15 ermöglichen. Am Ende der linearen Schienen 15 befindet sich ebenfalls auf der stabilen Grundplatte 21 befestigt ein rotativer Antrieb 5.

An der rotierenden Planfläche des Antriebes 5 ist ein erstes Futter (erste Spannvorrichtung 6), z.B. ein hydraulisch oder pneumatisch betätigtes Zweibackenfutter befestigt. An dem Gegenhalter 9 ist ein Futter (zweite Spannvorrichtung 7), z.B. ein hydraulisch oder pneumatisch betätigtes Zweibackenfutter, drehbar gelagert montiert. Die Drehachse für das Spannfutter (zweite Spannvorrichtung 7) fällt mit der Drehachse des Antriebes 5 zusammen, egal in welcher Position der Gegenhalter auf den linearen Schienen 15 steht, da die Drehachsen von Gegenhalter 9 und Antrieb 5 zusammenfallen und parallel zu den linearen Schienen 15 verlaufen. Die Spannfutter 6 und 7 stehen sich gegenüber. Der Gegenhalter 9 kann mit Hilfe eines einfachen Antriebes, z.B. einem Pneumatikzylinder entlang der Schienen 15, automatisch verfahren werden.

Diese Vorrichtung kann direkt mit ihrer stabilen Grundplatte 21 auf dem Maschinentisch, beispielsweise einer dreiachsigen Fräsmaschine befestigt werden.

Nachfolgend wird die Bearbeitung des Werkstücks erläutert.

In einem ersten Arbeitsschritt wird ein quaderförmiger Rohling (Werkstück 16) mit Aufmaß auf allen Seiten in der Vorrichtung an beiden Stirnseiten, einmal im Spannfutter 6 und einmal im Spannfutter 7, gespannt. Wenn der Hub der Spannbacken ausreichend groß gewählt ist, können Rohlinge unterschiedlicher Dicke gespannt werden. Durch das Verfahren des Gegenhalters 9 entlang der Schienen 15 mit Hilfe eines Antriebs 5 ist es möglich unterschiedlich lange Rohlinge (Werkstücke 16) zu spannen und außerdem diese automatisch, z.B. durch ein Handhabungsgerät, z.B. einen Roboter, einsetzen zu lassen. Die Spannung des Rohlings (Werkstücks 16) auf zwei Seiten erfolgt, um eine stabile Spannung zu gewährleisten, die auch grobe Schrupparbeiten zulässt.

Es ist somit möglich, nur grob vorbearbeitete Rohlinge (Werkstücke 16), z.B. abgesägte Rohlinge (Werkstücke 16) sicher zu spannen und durch eine Bearbeitung von vier Seiten auf diesen vier Seiten in die gewünschten Abmessungen zu bringen. Außerdem können in dieser Aufspannung die gewünschten Formelemente, z.B. die Kavität für das mit der Formhälfte herzustellende Werkstück, von der Seite eventuell erforderliche Kühlbohrungen und andere Elemente, eingebracht werden. Die Vorrichtung kann die quaderförmige Formhälfte durch Rotation so positionieren, dass alle vier Seiten für eine Fräsbearbeitung von oben und der Seite zugänglich sind. Erfindungsgemäß ist es nicht erforderlich, alle vier freiliegenden Seiten zu bearbeiten. Vielmehr reicht es, wenn zumindest zwei der freiliegenden Seiten des Werkstücks fertigbearbeitet werden, so dass dieses beim Umspannen an diesen beiden einander gegenüberliegenden fertigbearbeiteten Seiten gespannt werden kann. Somit können in der ersten Aufspannung entweder alle vier Seiten vollständig bearbeitet werden oder es werden nur zwei Seiten vollständig bearbeitet, so dass die restliche Bearbeitung in der zweiten Aufspannung erfolgt. Dies kann günstig sein, wenn diese Bereiche des Werkstücks in der zweiten Aufspannung ebenfalls für eine Bearbeitung zugänglich sind oder gegebenenfalls besser zugänglich sind.

Wenn die Außenabmessungen der Formhälfte sehr eng toleriert sind, ist es möglich, diese Flächen zunächst so zu bearbeiten, dass ein nur sehr kleines Aufmaß auf den herzustellenden Flächen stehen bleibt. Anschließend wird dieses Aufmaß automatisch in der Maschine mit einem geeigneten automatischen 3D-Taster durch Antasten ermittelt und so das exakte Zustellmaß für die Fertigbearbeitung festgestellt, um dann diese Flächen prozesssicher in den erforderlichen Toleranzen fertig zu bearbeiten.

Nach der Bearbeitung einer Formhälfte (Werkstück 16) von vier Seiten in der beschriebenen Weise kann die Formhälfte (Werkstück 16) durch ein Handhabungsgerät so umgespannt werden, dass die noch nicht bearbeiteten Stirnseiten 22 und 23, an denen die Formhälfte (Werkstück 16) zuvor in den beiden Spannfuttern 6 und 7 gespannt wurde, zugänglich werden und ebenfalls fertig bearbeitet werden können. Dazu wird die Formhälfte (Werkstück 16) durch das Handhabungsgerät um 90 Grad gedreht und an den bereits bearbeiteten Stirnseiten 24 und 25 in der Vorrichtung erneut gespannt. Diese zweite Spannung kann auch in einer anderen Maschine erfolgen, in der ebenfalls eine solche Vorrichtung installiert ist, z.B. wenn das eine effizientere Bearbeitung für die verbleibenden Stirnseiten ermöglicht. Nach Bearbeitung der Stirnseiten 22 und 23 kann das von sechs Seiten fertig bearbeitete Werkstück entnommen werden, natürlich auch automatisch durch ein Handhabungsgerät.

Auf diese Weise wird eine vollautomatische Sechsseitenbearbeitung möglich. Einzige Voraussetzung ist, dass die Abmessungen der zu bearbeitenden Formhälften (Werkstücke 16) den Spannbereich der Spannfutter 6 und 7, bzw. der Vorrichtung mit den linearen Schienen 15 einhalten.

Bei bestimmten Zerspanaufgaben ist eine simultane 5Achsbearbeitung wünschenswert. Wenn die Vorrichtung in einer 3Achsmaschine installiert wird, besteht auf Grund des rotativen Antriebes 5 bereits die Mögichkeit einer simultanen Vierachsbearbeitung. Für eine simultane 5Achsbearbeitung muss daher nur eine weitere Achse ergänzt werden. Diese wird als Schwenkachse so ausgeführt, dass der Aufbau wie nachfolgend beschrieben aussieht.

Auf einem Maschinentisch 1 ist eine Schwenkbrücke 13 montiert. Die Schwenkbrücke 13 umfasst einen rotativen Antrieb 2 zum Verschwenken der Schwenkbrücke 13. Auf der zu verschenkenden Schwenkbrücke 13 wird die Grundplatte 21 der Vorrichtung so befestigt, dass die linearen Schienen 15 im rechten Winkel zu der Achse 3 des Antriebes 2 stehen. Damit ist die Achsrichtung des Antriebes 5 ebenfalls so gewählt, dass diese senkrecht zur der Schwenkachse 3 der Schwenkbrücke 13 steht.

Der Maschinentisch 1 kann entlang Schienen 26 verfahren werden und so eine der linear verfahrbaren Achsen der Werkzeugmaschine 1 ausbilden. Dieser kann aber auch in der Werkzeugmaschine 1 fest montiert sein, wenn die Hauptspindel 27 in drei linearen Achsen verfahren wird. Entsprechende oder auch andere Achsanordnungen der Linearachsen sind aus dem Werkzeugmaschinenbau bekannt.

Da Antrieb 5, lineare Schienen 15 und Gegenhalter 9 eine gewisse Baulänge erreichen, wird die stabile, auf der Brücke 13 zu befestigende Grundplatte 21 relativ lang. Abhängig von der Einbaulage der Schwenkbrücke 13 in einer Werkzeugmaschine, z.B. über einem zu verfahrenden Maschinentisch 1 einer Fräsmaschine, ist der Schwenkbereich der zu verschwenkenden Schwenkbrücke 13 dadurch relativ eingeschränkt und kann in besonderen Fällen nur wenige Grad betragen.

Die beiden Antriebe 2 und 5 ermöglichen eine nahezu beliebige, nur vom Schwenkbereich der zu verschwenkenden Schwenkbrücke 13 abhängige, Orientierung der Formhälfte bzw. des Werkstückes 16 im Arbeitsraum der Werkzeugmaschine 1. Insbesondere bei Bearbeitungen, bei denen nur kleine Schwenkwinkel gewünscht werden, ist diese Anordnung der rotativen Achsen vorteilhaft.

Es ist nicht erforderlich, dass die Achsen der Antriebe 2 und 5 exakt senkrecht zueinander stehen. Auch eine Anordnung mit beispielsweise nur 45 Grad zwischen den Achsen wäre für eine simultane 5Achsbearbeitung noch ausreichend. Derartige Achsstellungen sind auch von anderen 5Achsmaschinen bekannt. Die Achsanordnung muss lediglich in der Steuerung hinterlegt werden, damit diese die Maschine richtig ansteuern kann.

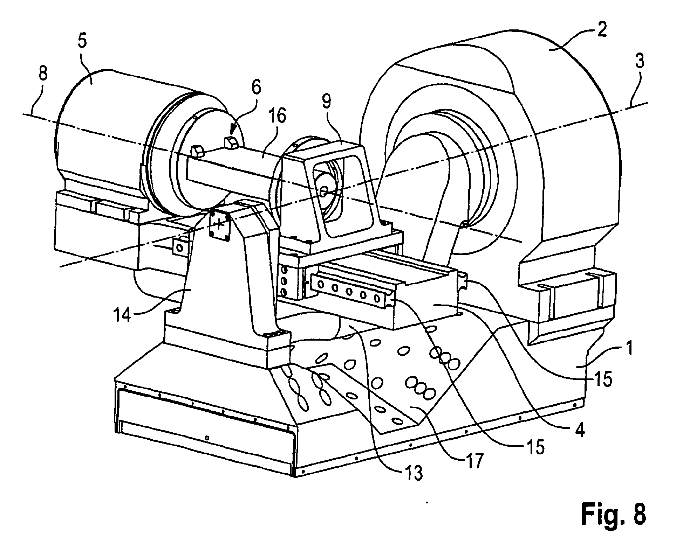

Nachfolgend wird ein Ausführungsbeispiel der Werkzeugmaschine in Verbindung mit den Fig. 8 bis 11 beschrieben.

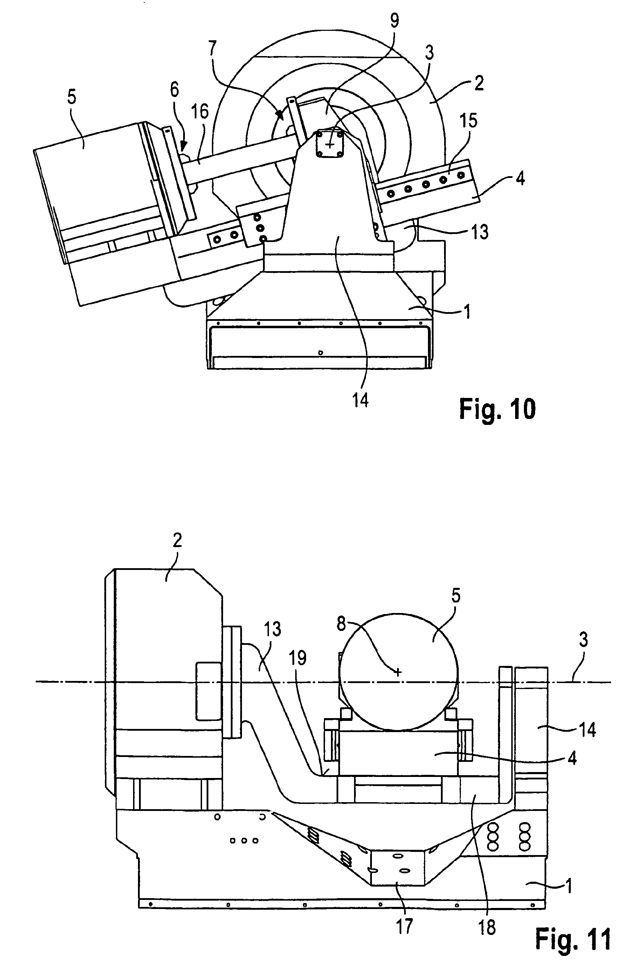

Die Werkzeugmaschine umfasst einen Maschinentisch 1, welcher eine Schwenkbrücke 13 lagert. Die Schwenkbrücke 13 ist mittels einer ersten Antriebseinheit 2 (rotativer Antrieb) an dem Maschinentisch 1 gelagert. Dabei umfasst die erste Antriebseinheit 2 beispielsweise einen elektrischen Torquemotor, dessen Abtriebswelle mit der in Seitenansicht U-förmigen Schwenkbrücke 13 (siehe Fig. 11) verbunden ist. Der freie Endbereich der Schwenkbrücke 13 ist mittels eines Gegenlagers 14 (Lagerbock) an dem Maschinentisch 1 gelagert.

Die Schwenkbrücke 13 ist somit um eine erste Drehachse 3 schwenkbar.

Die Schwenkbrücke 13 lagert einen Tisch 4 (vorstehend auch als Grundplatte 21 bezeichnet), welcher mit Schienen 15 versehen ist. Auf dem Tisch 4 ist längsverschiebbar ein Gegenlager 9 gelagert und relativ zu dem Tisch 4 mittels eines im Einzelnen nicht dargestellten Antriebs zum Spannen eines Werkstücks 16 verschiebbar.

Wie aus den Figuren ersichtlich, ist die Brücke in der Seitenansicht im Wesentlichen U-förmig ausgebildet und umfasst ein Basisteil 18. Dieses Basisteil 18 bildet eine Aufspannfläche 19. Die Aufspannfläche 19 weist einen Abstand zu der ersten Drehachse 3 auf, da die Brücke in der Seitenansicht im Wesentlichen U-förmig oder ausgekränkt ausgebildet ist.

Auf der Aufspannfläche 19 ist der oben genannte Tisch 4 mitsamt einer zweiten Antriebseinheit 5 und den Gegenlagern 9, welches quer zur ersten Schwenkachse 13 verfahrbar ist, angeordnet. Mittels der zweiten Drehachse 8 kann somit ein Werkstück 16 quer zu ersten Drehachse 3 gedreht werden. Durch die Verfahrbarkeit des Gegenlagers 9 ist eine entsprechende Spannung des Werkstücks möglich.

Wie sich aus den Figuren ergibt, ist das Werkstück 16 im Wesentlichen in einer durch die Drehachsen 3 und 8 aufgespannten Ebene angeordnet.

An dem Tisch 4 lagert die zweite Antriebseinheit 5 (rotativer Antrieb), welcher eine Drehung um die zweite Drehachse 8 ermöglicht. Auch die zweite Antriebseinheit 5 kann beispielsweise einen elektrischen Torquemotor oder Ähnliches umfassen.

Die zweite Antriebseinheit 5 ist mit einer ersten Spannvorrichtung 6 versehen, während das Gegenlager 9 eine zweite Spannvorrichtung 7 umfasst. Es versteht sich, dass die zweite Spannvorrichtung 7 ebenfalls um die zweite Drehachse 8 drehbar an dem Gegenlager 9 gelagert ist.

Die beiden Drehachsen 3 und 8 sind so angeordnet, dass sie im Wesentlichen senkrecht zueinander angeordnet sind. Die zweite Drehachse 8 ist parallel zu den Schienen 15 des Tisches 4 ausgerichtet.

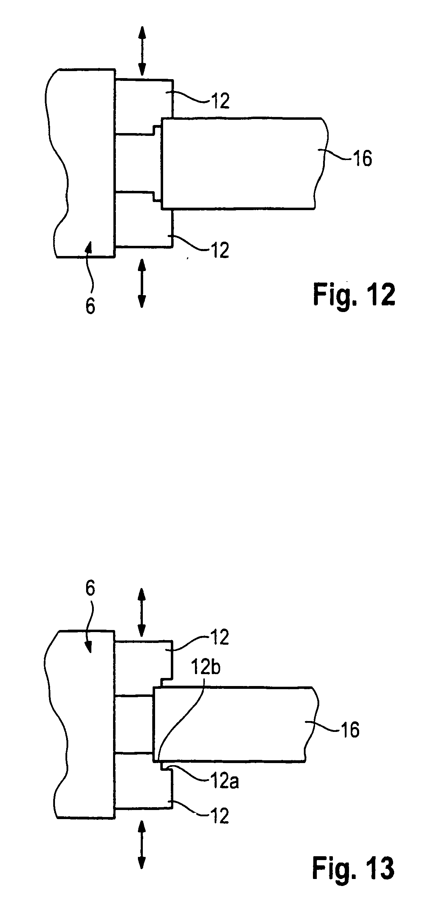

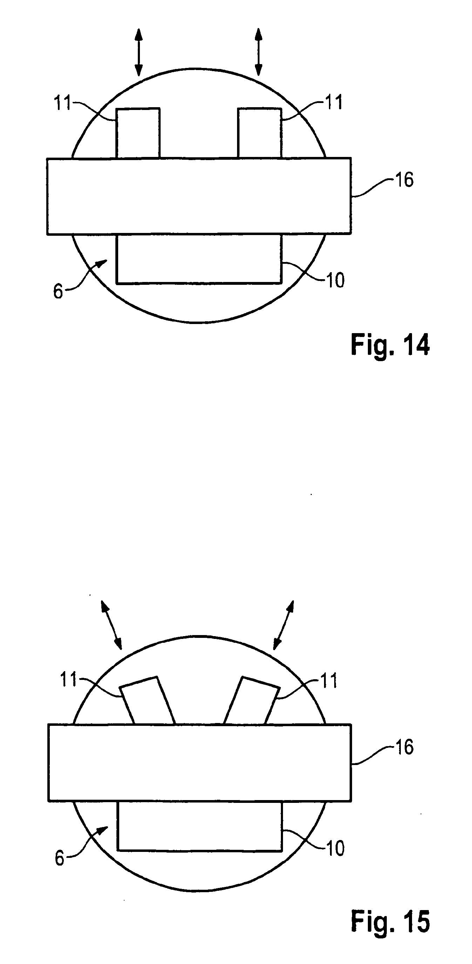

Die erste Spannvorrichtung 6 sowie die zweite Spannvorrichtung 7 sind beispielsweise hydraulisch oder pneumatisch betätigbar und umfassen beispielsweise ein Zweibackenfutter, so wie dies in den Fig. 12-14 dargestellt ist. Es versteht sich, dass auch andere Ausgestaltungsvarianten möglich sind. Bei dem in Fig. 14 gezeigten Ausführungsbeispiel umfasst das Spannfutter (Spannvorrichtung 6 bzw. 7) eine feste oder feststehende Spannbacke 10 sowie zwei bewegbare Spannbacken 11, deren Bewegbarkeit durch die Doppelpfeile in Fig. 14 dargestellt sind.

Die Fig. 12 und 13 zeigen eine gestufte Ausgestaltung der jeweiligen Spannbacke 12 mit einer vorderen Stufe 12a und einer hinteren Stufe 12b.

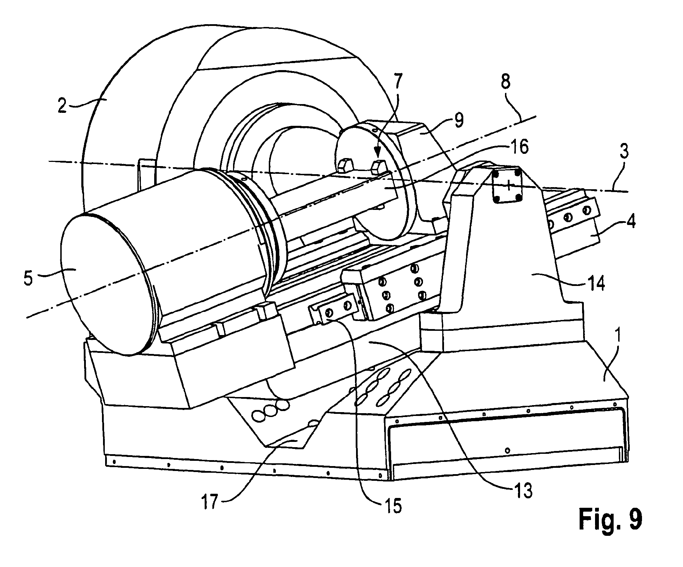

Wie sich insbesondere aus den Fig. 8-11 ergibt, ist der Maschinentisch 1 bevorzugterweise mit zumindest einer Ausnehmung 17 versehen, welche die Schwenkbarkeit der Schwenkbrücke 13 und damit des Tisches 4 vergrößert, so wie sich dies beispielsweise aus den Fig. 9 und 10 ersehen lässt.

Mittels der Werkzeugmaschine ist es möglich, Werkstücke 16, welche unterschiedliche Abmessungen haben, für eine Bearbeitung von vier Seiten an ihren zwei Stirnseiten zu spannen. Durch die Drehbarkeit um die zweite Drehachse 8 kann das Werkstück 16 (siehe Fig. 8 und 9) von allen vier Seiten bearbeitet werden. Lediglich die Stirnseiten, welche in den Spannvorrichtungen 6 und 7 gespannt sind, sind in der gezeigten Aufspannung nicht bearbeitbar.

Es ist erfindungsgemäß somit möglich, nur grob vorbearbeitete Rohlinge, beispielsweise abgesägte Rohlinge, sicher zu spannen und eine Bearbeitung an allen vier Seiten vorzunehmen, beispielsweise erforderliche Bohrungen einzubringen oder Konturen zu fräsen.

Durch die beiden Antriebseinheiten 2 und 5 und die Drehbarkeit um die Drehachsen 3 und 8 ergibt sich eine im Wesentlichen unbeschränkte Schwenkbarkeit bzw. Drehbarkeit des Werkstücks 16, welche lediglich durch die baulichen Rahmenbedingungen, insbesondere durch den Maschinentisch 1 begrenzt wird. Somit ergibt sich insbesondere bei Bearbeitungen, die nur einen relativ kleinen Schwenkwinkel benötigen, eine optimale Zugänglichkeit und Bearbeitbarkeit des Werkstücks 16.

Nach der Bearbeitung der vier Seiten des Werkstücks 16 ist es entweder möglich, dieses automatisiert zu entnehmen, beispielsweise mittels eines Roboters und in einer weiteren Werkzeugmaschine zu bearbeiten. Es ist jedoch auch möglich, das Werkstück 16 zu drehen, beispielsweise um 90°, und nochmals zwischen den Spannvorrichtungen 6 und 7 zu spannen, so dass auch die beiden weiteren Seiten bearbeitet werden können. Hierzu ist es besonders vorteilhaft, dass das Gegenlager 9 relativ zu dem Tisch 4 verfahrbar angeordnet und ausgebildet ist.

In besonders günstiger Ausgestaltung ist vorgesehen, dass eine Beschickung der Werkzeugmaschine mittels eines Roboters oder einer automatisierten Handhabung möglich ist. Dies wird begünstigt durch die optimierte Zugänglichkeit des Werkstücks 16. Dieses kann durch die Drehachsen 3 und 8 so geschwenkt werden, dass ein Roboter oder eine Handhabungseinrichtung das Werkstück 16 in optimaler Weise greifen kann, um es zu entnehmen oder um ein zu bearbeitendes Werkstück einzusetzen.

Die Werkzeugmaschine ermöglicht somit eine voll automatische Sechs-Seitenbearbeitung eines Werkstücks.

Da in der ersten Spannung mittels der Spannvorrichtungen 6 und 7 das Werkstück 16 noch unbearbeitet oder nur teilweise bearbeitet ist, ist es besonders günstig, wenn sich die Spannbacken der Spannvorrichtung 6 und 7 (Spannfutter) an die jeweiligen Gegebenheiten anpassen können. Hierzu ist es bei einem noch nicht bearbeiteten Werkstück möglich, dass die Seiten nicht parallel sind und relativ große Toleranzen aufweisen. Hierfür kann es günstig sein, gestufte Spannbacken gemäß den Fig. 12 und 13 vorzusehen, so dass sich mittels der vorderen Stufen 12a eine Spannung eines Werkstücks mit einer größeren Toleranz ermöglichen lässt. Hierbei kann beispielsweise die Oberfläche der Spannbacken 12 rauer beschaffen sein. In der zweiten Stufe 12b erfolgt dann eine präzise Spannung des Werkstücks 16 an bereits bearbeiteten Flächen, so wie dies in Fig. 13 dargestellt ist.

Um Unparallelitäten eines unbearbeiteten Werkstücks 16 auszugleichen, ist es erfindungsgemäß auch möglich, eine Spannvorrichtung in geteilter Bauart auszubilden (geteiltes Spannfutter). Hierbei ist, wie in Fig. 14 dargestellt, eine feste Spannbacke 10 vorgesehen, gegen welche das Werkstück 16 angelegt wird, während der eigentliche Spannvorgang mittels der bewegbaren Spannbacken 11 erfolgt. Hierdurch kann auf Taster oder Ähnliches verzichtet werden, welche aus dem Stand der Technik bekannt sind, um die exakte Positionierung eines Werkstücks zu ermitteln. Weiterhin kann es günstig sein, zumindest eine der Spannbacken schräg zu stellen (beispielsweise eine Schrägstellung der beiden Spannbacken 11 gemäß Fig. 15). Die Spannbacken fahren somit schräg auf die zu spannende Seite des Werkstücks 16 auf. Durch die entstehende Querkraft wird die Führung der Spannbacke 11 ebenfalls verspannt und gleicht ein eventuelles Spiel in der Führung der Spannbacke 11 aus.

Vorstehend wurde eine Bearbeitung des Werkstücks 16 so beschrieben, dass zunächst vier Seiten bearbeitet werden und nachfolgend nach dem Umspannen des Werkstücks 16 die beiden anderen Seiten einer Bearbeitung unterzogen werden. Diese Aufteilung ist erfindungsgemäß jedoch nicht zwingend, so dass jede andere Kombination einer Werkstück-Bearbeitung möglich ist.

### Bezugszeichenliste

- 1: Maschinentisch / Werkzeugmaschine
- 2: erste Antriebseinheit
- 3: erste Drehachse
- 4: Tisch
- 5: zweite Antriebseinheit
- 6: erste Spannvorrichtung / Spannfutter
- 7: zweite Spannvorrichtung / Spannfutter
- 8: zweite Drehachse
- 9: Gegenlager / Gegenhalter
- 10: feste Spannbacke
- 11: bewegbare Spannbacke
- 12: gestufte Spannbacke
- 12a: vordere Stufe
- 12b: hintere Stufe
- 13: Schwenkbrücke
- 14: Gegenlager
- 15: Schiene
- 16: Werkstück / Rohling / Formhälfte
- 17: Ausnehmung
- 18: Basisteil
- 19: Aufspannfläche
- 20: Palette
- 21: Grundplatte
- 22-25: Stirnseite
- 26: Schiene
- 27: Hauptspindel

## Patentansprüche

1. Fräsverfahren zur automatischen Bearbeitung eines quaderförmigen Werkstücks (16), wobei ein quaderförmiger Rohling, welcher an allen sechs Seiten mit einem Aufmaß versehen ist, an zwei gegenüberliegenden Seiten gespannt wird, wobei die Spannung mittels zweier einander gegenüberliegender Spannvorrichtungen (6, 7) erfolgt, welche in einer Bewegungsachse (8) relativ zueinander bewegbar sind, wobei durch die beiden Spannvorrichtungen (6, 7) jeweils eine Spannkraft quer zu der Bewegungsachse (8) aufgebracht wird und wobei das Werkstück (16) in Richtung der Bewegungsachse (8) nicht mit einer Spannkraft beaufschlagt wird, wobei nachfolgend zumindest zwei der vier freiliegenden Seiten des Werkstücks (16) fertig bearbeitet werden, wobei anschließend das Werkstück (16) aus den Spannvorrichtungen (6, 7) entnommen und an zwei bearbeiteten Seiten mittels der Spannvorrichtungen (6, 7) gespannt wird und die unbearbeiteten Seiten fertig bearbeitet werden.

2. Verfahren nach Anspruch 1, **dadurch gekennzeichnet, dass** das Werkstück (16) in der ersten Aufspannung zur Bearbeitung von zumindest zwei der vier Seiten um die Bewegungsachse (8) gedreht wird.

3. Verfahren nach Anspruch 1 oder 2, **dadurch gekennzeichnet, dass** der Rohling an den beiden in der ersten Aufspannung gespannten Seiten ein größeres Aufmaß aufweist.

4. Verfahren nach einem der Ansprüche 1 bis 3, **dadurch gekennzeichnet, dass** das Werkstück (16) jeweils mittels einer Handlingsvorrichtung in die Spannvorrichtungen (6, 7) eingelegt und/oder aus den Spannvorrichtungen (6, 7) entnommen wird.

5. Verfahren nach einem der Ansprüche 1 bis 4, **dadurch gekennzeichnet, dass** die Fertigbearbeitung des Werkstücks (16) jeweils mit einem geringeren Aufmaß erfolgt und dass nach einer automatischen Maßkontrolle eine endgültige Fertigbearbeitung erfolgt.

## Claims

1. A milling method for the automatic treatment of a block-shaped workpiece (16), wherein a block-shaped blank which is provided with an oversize on all six sides is clamped at two opposite sides, wherein the clamping action is carried out by means of two clamping devices (6, 7) which are opposite each other and which are movable relative to each other in a movement axis (8), wherein a clamping force is respectively applied by the two clamping devices (6, 7) in a direction transverse to the movement axis (8), and wherein the workpiece (16) is not acted upon with a clamping force in the direction of the movement axis (8), wherein subsequently at least two of the four exposed sides of the workpiece (16) are finished, wherein subsequently the workpiece (16) is removed from the clamping devices (6, 7) and is clamped on two treated sides by means of the clamping devices (6, 7) and the untreated sides are finished.

2. The method according to claim 1, **characterized in that** the workpiece (16) is rotated in the first clamping process about the movement axis (8) for treating at least two of the four sides.

3. The method according to claim 1 or 2, **characterized in that** the blank has a greater oversize on the two sides clamped in the first clamping process.

4. The method according to any one of claims 1 to 3, **characterized in that** the workpiece (16) is respectively inserted by means of a handling device into the clamping devices (6, 7) and/or is removed from the clamping devices (6, 7).

5. The method according to any one of claims 1 to 4, **characterized in that** the workpiece (16) is respectively finished with a smaller oversize and that after an automatic dimensional inspection a final finishing operation is carried out.

## Revendications

1. Procédé de fraisage destiné au traitement automatique d'une pièce à usiner parallélépipédique (16), sachant qu'une ébauche parallélépipédique, qui est pourvue d'une surépaisseur sur l'ensemble des six faces, est serrée sur deux faces opposées, sachant que le serrage est réalisé à l'aide de deux dispositifs de serrage (6, 7) opposés qui peuvent se déplacer dans un axe de déplacement (8) l'un par rapport à l'autre, sachant qu'une force de serrage est respectivement appliquée par les deux dispositifs de serrage (6, 7) transversalement à l'axe de déplacement (8) et sachant que la pièce à usiner (16) n'est pas sollicitée en direction de l'axe de déplacement (8) par une force de serrage, sachant qu'au moins deux des faces côtés dégagés de la pièce à usiner (16) sont ensuite finies, sachant que la pièce à usiner (16) est ensuite retirée des dispositifs de serrage (6, 7) et est serrée sur deux faces traitées à l'aide de dispositifs de serrage (6, 7) et les faces non traitées sont finies.

2. Procédé selon la revendication 1, **caractérisé en ce que** la pièce à usiner (16) est tournée autour de l'axe de déplacement (8) dans le premier serrage pour le traitement d'au moins deux des quatre faces.

3. Procédé selon la revendication 1 ou 2, **caractérisé en ce que** l'ébauche présente une plus grande surépaisseur sur les deux faces serrées dans le premier serrage.

4. Procédé selon l'une quelconque des revendications 1 à 3, **caractérisé en ce que** la pièce à usiner (16) est respectivement introduite à l'aide d'un dispositif de manutention dans les dispositifs de serrage (6, 7) et/ou est retirée des dispositifs de serrage (6, 7).

5. Procédé selon l'une quelconque des revendications 1 à 4, **caractérisé en ce que** la pièce à usiner (16) est respectivement finie avec une surépaisseur moindre et **en ce qu'**une finition définitive est réalisée après une vérification automatique des dimensions.
